# FASCICULE DE BREVET EUROPEEN

(11) **EP 1 132 999 B1**
(45) Date de publication et mention de la délivrance du brevet: **03.12.2008**
(21) Numéro de dépôt: 01400569.8
(22) Date de dépôt: 05.03.2001
(51) Int. Cl.: H01Q 1/32, H01Q 7/00, B60R 25/00, E05B 49/00

(54) **Véhicule automobile équipé d'une antenne exploitée pour un système de communication dédié**
Kraftfahrzeug mit Antenne für ein angepasstes Kommunikationssystem
Motor vehicle provided with an antenna for a dedicated communication system

(30) Priorité: 07.03.2000 FR 0002890
(43) Date de publication de la demande: 12.09.2001
(73) Titulaire: VALEO SECURITE HABITACLE S.A.S., 94042 Créteil Cédex (FR)
(72) Inventeur: Tessier, Virginie, 94700 Maisons Alfort (FR)
(74) Mandataire: Rosolen-Delarue, Katell

(56) Documents cités:
- EP-A- 0 523 602

## Description

L'invention concerne un véhicule automobile équipé d'un système de communication, basse fréquence, dédié, disposant d'une antenne et en particulier un système permettant des échanges d'information entre un dispositif, dit identificateur, doté de moyens d'identification, installé dans le véhicule, et un dispositif identifiant porté par un utilisateur, à des fins d'actionnement d'organes comportés par le véhicule.

De tels systèmes, dédiés, de communication sont, par exemple, prévus pour offrir des possibilités de commande dans des conditions, dites "mains libres". Ils permettent à un utilisateur de faire fonctionner des organes du véhicule, et, par exemple, le démarreur du moteur, du simple fait de la détection de sa présence dans l'habitacle du véhicule, si cet utilisateur porte un identifiant qui est reconnu par l'identificateur. La délimitation d'une zone déterminée de ce genre dépend de l'antenne par l'intermédiaire de laquelle l'identificateur communique avec l'identifiant. Cet identifiant est constitué, de manière habituelle, par un transpondeur qui capte les émissions réalisées par l'identificateur, via l'antenne, et qui répond par des signaux que l'antenne capte au profit de l'identificateur, lorsque ce transpondeur est dans la zone de portée définie par l'antenne. Dans une forme de réalisation connue, l'antenne mise en oeuvre pour un système de communication, tel qu'envisagé ci-dessus, est une antenne de grande dimension qui forme une boucle disposée sur le véhicule et qui est prévue pour véhiculer un courant important et pour émettre un signal à forte énergie, par exemple un signal permettant de fournir à l'identifiant l'énergie nécessaire à sa réponse. Cette antenne en boucle est réalisée à l'aide d'une longueur de câble torsadé multibrins dont les brins sont reliés bout à bout et brin par brin, de manière à former des spires connectées en série. Elle permet par exemple d'équiper le cadre d'une porte de véhicule automobile sur le pourtour de laquelle la longueur de câble est disposée. Toutefois une telle solution n'est pas pleinement satisfaisante, lorsqu'il s'agit de délimiter une zone de communication à l'intérieur de l'habitacle du véhicule et, en particulier une zone s'allongeant selon l'axe longitudinal du véhicule. Par ailleurs, il est préférable d'éviter, pour certaines applications, que l'identifiant puisse agir, alors que l'utilisateur est à côté du véhicule.

Le document EP-A-0 523 602 (col. 4, 1.15) divulgue une antenne dans une console d'un vehicule.

L'invention a donc pour objet un véhicule qui comporte un habitacle sur le plancher duquel est située une console, d'orientation longitudinale, s'étendant vers l'avant, et qui est équipé d'un système de communication, basse fréquence, dédié, disposant d'une antenne et permettant des échanges de signaux d'information dans une zone de communication correspondant à la zone de rayonnement d'antenne, dont l'extension volumique est choisie en forme et dimensions.

Selon une caractéristique de l'invention, l'antenne du système est une antenne à air formant une boucle d'allure allongée autour de la console, au long et en bordure de laquelle elle s'étend, pour former une zone de communication se répartissant sur au moins une partie de la longueur de l'habitacle à l'intérieur de celui-ci.

Selon l'invention, la boucle que forme l'antenne du système, se prolonge au niveau du plancher, au-delà d'au moins une extrémité de la console, pour créer une zone de communication s'allongeant au-delà de la console, lorsque celle-ci est plus courte que l'habitacle.

Selon une variante de l'invention, l'antenne du système, se prolonge au-delà de l'extrémité avant de la console et se développe au long de la planche de bord et/ou du tableau de bord, à l'intérieur de l'habitacle, pour délimiter une zone de communication couvrant l'essentiel de l'intérieur de l'habitacle et en particulier à l'avant.

L'invention a aussi pour objet un véhicule automobile, dans lequel l'antenne, en forme de boucle allongée, telle que définie ci-dessus, est une antenne d'un système de communication, de type "mains libres", permettant des échanges d'informations entre un dispositif de reconnaissance installé dans le véhicule et un dispositif identifiant porté par un utilisateur, à des fins d'actionnement d'organes comportés par le véhicule.

L'invention, ses caractéristiques et ses avantages sont précisés dans la description qui suit en liaison avec les figures évoquées ci-dessous.

La figure 1 présente un schéma d'un véhicule doté d'un système de communication à antenne en boucle, selon l'invention.

La figure 2 présente un schéma de principe relatif à une première variante d'antenne.

La figure 3 présente un schéma d'une seconde variante d'antenne.

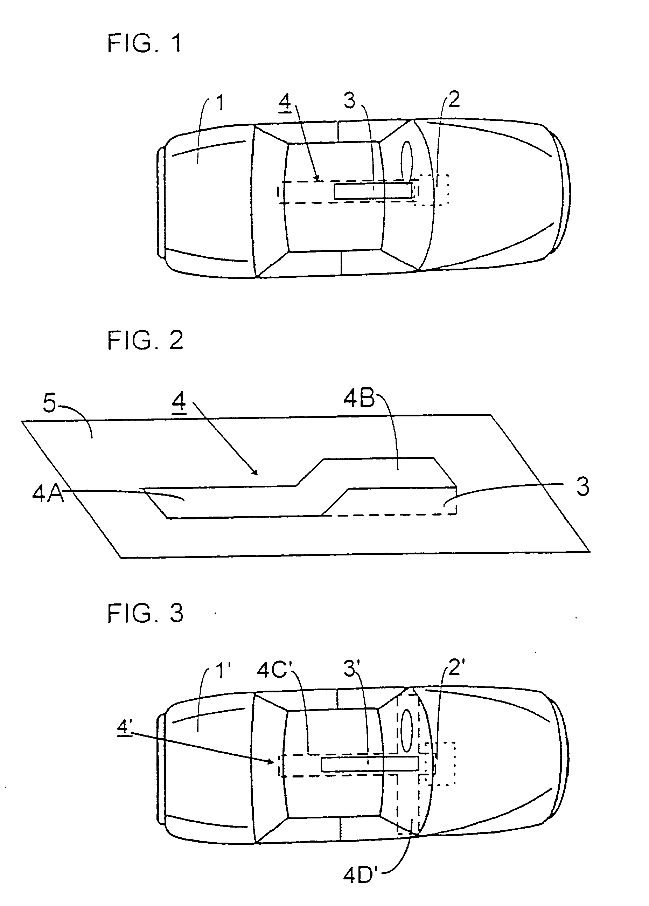

Le véhicule automobile 1 présenté sur la figure 1 est supposé équipé d'un système de communication, basse fréquence, dédié permettant des échanges de signaux d'information entre un dispositif 2, installé à bord du véhicule, et un dispositif, porté par un utilisateur et permettant à cet utilisateur d'agir sur des organes comportés par le véhicule, du simple fait de la présence du dispositif qu'il porte dans une zone de communication définie pour le système. Dans une forme de réalisation, le système de communications est de type "mains libres", il est par exemple prévu pour permettre un démarrage du véhicule, lorsqu'un utilisateur, portant un dispositif identifiant déterminé, est dans une zone de communication délimitée à l'intérieur de l'habitacle du véhicule.

Le dispositif identifiant, non représenté ici. est par exemple un transpondeur qui reçoit les signaux électromagnétiques, basse fréquence. que lui transmet le dispositif 2, via une antenne 4, à des fins de reconnaissance, et qui émet des signaux électromagnétiques, basse fréquence, de réponse vers ce dispositif 2, pour se faire reconnaître. L'antenne 4 du dispositif 2 est une antenne à air, réalisée en forme de boucle fermée pour avoir une zone de rayonnement dont l'extension volumique peut être bien délimitée dans sa forme et dans ses dimensions. Cette délimitation peut être déterminée, de manière connue en soi, par action sur la boucle et sur la puissance qui y est appliquée. Le choix d'une délimitation précise de zone de rayonnement d'antenne 4 est important dans le type d'application visé, car il sert à définir une zone de communication, à l'intérieur de laquelle un dispositif porté par un utilisateur, doit se trouver pour communiquer avec un dispositif 2. Ceci peut être le cas, en particulier, si le dispositif porté par l'utilisateur est un dispositif identifiant qui ne doit être actif que dans une zone de communication prédéterminée, à l'intérieur du véhicule, et dont on souhaite maîtriser la forme et les dimensions.

L'invention propose donc une antenne pour système, tel qu'évoqué ci-dessus, d'un véhicule qui comporte un habitacle sur le plancher duquel repose une console 3, d'orientation longitudinale, s'étendant vers l'avant. Comme il est connu, ce genre de console, en surélévation, s'étend le plus souvent entre les sièges avant du véhicule et jusque sous la planche de bord, à l'avant de l'habitacle. Elle se prolonge parfois au-delà des sièges avant, vers l'arrière de l'habitacle. Une telle console porte classiquement des organes de commandes, des emplacements de rangement et/ou des accessoires, mis à disposition des passagers.

Selon l'invention, l'antenne 4, pour système tel qu'évoqué plus haut, est disposée en boucle autour de la console 3, d'orientation longitudinale, qui s'étend vers l'avant de l'habitacle du véhicule, par exemple au milieu du véhicule pris dans sa largeur.

La boucle formée par l'antenne 4 est d'allure allongée et elle s'étend au long et en bordure de la console 3, comme schématisé sur la figure 1. Elle est susceptible d'être prolongée, au-delà de cette console 3, en particulier vers l'arrière du véhicule dans l'habitacle, lorsque la longueur de la console est plus courte que celle de l'habitacle et par exemple lorsqu'elle s'arrête vers l'arrière, au niveau des sièges avant que contient l'habitacle. Ce prolongement de boucle d'antenne 4 s'effectue par exemple au niveau du plancher 5, au-delà de la console 3, comme symbolisé par l'extension 4A sur la figure 2. La partie restante 4B de la boucle qui ceinture cette console est ici supposée située à un niveau différent et par exemple au sommet ou à proximité du sommet de la console 3, comme schématisé.

Une zone de communication s'étendant sur la longueur de l'habitacle à l'intérieur du véhicule peut être ainsi obtenue, en particulier dans le cas d'un véhicule à habitacle long, comme un monospace.

Un prolongement de boucle peut aussi être réalisé au-delà de l'extrémité avant de la console, comme schématisé sur la figure 3, pour obtenir une zone de communication couvrant l'essentiel de l'intérieur de l'habitacle, en particulier à l'avant. A cet effet, la partie allongée de la boucle 4C', étendue le long de la console 3', se poursuit par une extension transversale qui se développe, par exemple, au long de tout ou partie de la planche de bord et/ou du tableau de bord. Ceci est schématisé sur la figure 3, par la portion de boucle 4D' qui s'étend transversalement par rapport à l'axe longitudinal de la console 3', au devant de cette console dans l'habitacle de véhicule. La boucle 4', ainsi formée, est alors reliée à un dispositif 2' du véhicule 1' qui correspond au dispositif 2 du véhicule 1 présenté en figure 1. L'extension transversale 4D' est, par exemple, réalisée de part et d'autre de l'axe longitudinal médian du véhicule. Selon les besoins, elle peut aussi être limitée à la partie centrale avant ou encore elle peut ne concerner qu'un seul côté de l'habitacle par rapport à l'axe longitudinal médian du véhicule.

## Revendications

1. Véhicule automobile, qui comporte un habitacle, sur le plancher (5) duquel est située une console (3), d'orientation longitudinale, s'étendant vers l'avant, et qui est équipé d'un système de communication, basse fréquence, dédié, disposant d'une antenne et permettant des échanges de signaux d'information dans une zone de communication, correspondant à la zone de rayonnement de l'antenne, dont l'extension volumique est choisie en forme et dimensions, **caractérisé en ce que** l'antenne (4 ou 4') du système est une antenne à air formant une boucle d'allure allongée autour de la console, au long et en bordure de laquelle elle s'étend.

2. Véhicule, selon la revendication 1, dans lequel la boucle (4B) que forme l'antenne (4) du système, se prolonge par une extension (4A) au niveau du plancher au-delà d'au moins une extrémité de la console (3) pour créer une zone de communication s'allongeant au-delà de la console, lorsque celle-ci est plus courte que l'habitacle.

3. Véhicule, selon l'une des revendications 1, 2, dans lequel l'antenne (4') du système, se prolonge au-delà de l'extrémité avant de la console (3') et se développe au long de la planche de bord et/ou du tableau de bord à l'intérieur de l'habitacle pour délimiter une zone de communication couvrant l'essentiel de l'intérieur de l'habitacle et en particulier à l'avant.

4. Véhicule, selon l'une des revendications 1 à 3, dans lequel l'antenne (4 ou 4'), en forme de boucle allongée, est une antenne d'un système de communication de type "mains libres" permettant des échanges d'informations entre un dispositif de reconnaissance installé dans le véhicule et un dispositif identifiant porté par un utilisateur à des fins d'actionnement d'organes comportés par le véhicule.

## Claims

1. Automobile vehicle comprising a passenger compartment, on the floor (5) of which there is a console (3) arranged in the longitudinal direction and extending forwards, that is provided with a special purpose low frequency communication system fitted with an antenna to exchange information signals in a communication zone, corresponding to the antenna radiation zone, the volume of which has a chosen shape and chosen dimensions, **characterised in that** the antenna (4 or 4') of the system is a coreless loop antenna forming an elongated loop around the console, extending along and around the edge of the console.

2. Vehicle according to claim 1, in which the loop (4B) that forms the antenna (4) of the system is extended by an extension (4A) on the floor beyond at least one end of the console (3) to create a communication zone extending beyond the console, when the console is shorter than the passenger compartment.

3. Vehicle according to either claim 1, 2, in which the antenna (4') of the system extends beyond the front end of the console (3') and develops along the dashboard and / or the instrument panel inside the passenger compartment to delimit a communication zone, essentially covering the inside of the passenger compartment and particularly towards the front.

4. Vehicle according to one of claims 1 to 3, in which the antenna (4 or 4') in the form of an elongated loop, is an antenna of a "hands free" type communication system that can be used for information exchanges between a recognition device installed in the vehicle and an identifying device worn by a user for the purposes of actuating devices fitted on the vehicle.

## Patentansprüche

1. Kraftfahrzeug mit einem Innenraum, auf dessen Boden (5) eine in Längsrichtung verlaufende Konsole (3) angeordnet ist, die sich nach vorne erstreckt und die mit einer dedizierten Niederfrequenz-Kommunikationseinrichtung ausgerüstet ist, die eine Antenne aufweist und zum Austausch von Informationssignalen innerhalb eines Kommunikationsbereiches dient, der dem Antennen-Strahlungsbereich entspricht, dessen Volumenausdehnung hinsichtlich Form und Abmessungen entsprechend gewählt ist, **dadurch gekennzeichnet, dass** die Antenne (4 bzw. 4') der Einrichtung eine Luftantenne ist, die um die Konsole herum, in deren Länge und an deren Rand entlang sie sich erstreckt, eine länglich ausgebildete Schleife bildet.

2. Fahrzeug nach Anspruch 1, bei dem sich die von der Antenne (4) der Einrichtung gebildete Schleife (4B) am Boden in einer Verlängerung über mindestens ein Ende der Konsole (3) hinaus fortsetzt, um einen Kommunikationsbereich zu bilden, der sich über die Konsole hinaus erstreckt, wenn diese kürzer ist als der Innenraum.

3. Fahrzeug nach einem der Ansprüche 1, 2, bei dem sich die Antenne (4') der Einrichtung über das vordere Ende der Konsole (3') hinaus fortsetzt und in der Länge des Armaturenbretts und/oder der Instrumententafel im Innern des Innenraums verläuft, um einen Kommunikationsbereichs abzugrenzen, der das Innere des Innenraums im Wesentlichen und insbesondere im vorderen Bereich abdeckt.

4. Fahrzeug nach einem der Ansprüche 1 bis 3, bei dem die als längliche Schleife ausgebildete Antenne (4 bzw. 4') eine Antenne einer Freisprech-Kommunikationseinrichtung ist, mit dem zwischen einer im Fahrzeug angeordneten Erkennungsvorrichtung und einer von einem Benutzer zum Betätigen von im Fahrzeug enthaltenen Stellgliedern mitgeführten Identifikationsvorrichtung Informationen ausgetauscht werden können.
